# EUROPEAN PATENT SPECIFICATION

(11) **EP 2 079 247 B1**
(45) Date of publication and mention of the grant of the patent: **12.11.2014**
(21) Application number: 07721334.6
(22) Date of filing: 01.06.2007
(51) Int. Cl.: H04W 92/08, H04W 4/00, H04W 76/00, H04B 1/38, H04L 29/08, H04W 88/06

(54) **WIRELESS ACCESS SYSTEM AND METHOD**
DRAHTLOSES ZUGANGSSYSTEM UND VERFAHREN
SYSTÈME ET PROCÉDÉ D'ACCÈS SANS FIL

(30) Priority: 03.11.2006 CN 200610143861
(43) Date of publication of application: 15.07.2009
(73) Proprietor: ZTE Corporation, Shenzhen, Guangdong 518057 (CN)
(72) Inventor: LU, Chen, Shenzhen Guangdong 518057 (CN); LIANG, Yongsheng, Shenzhen Guangdong 518057 (CN); WANG, Yungfeng, Shenzhen Guangdong 518057 (CN); LI, Yan, Shenzhen Guangdong 518057 (CN); FENG, Weizhao, Shenzhen Guangdong 518057 (CN)
(74) Representative: Ilgart, Jean-Christophe
(86) International application number: PCT/CN2007/001761
(87) International publication number: WO 2008/052407

(56) References cited:
- EP-A1- 1 494 387
- WO-A2-00/18066
- WO-A2-02/01809
- JP-A- 2005 136 529
- KR-A- 20010 011 015
- US-A1- 2006 245 408
- US-B1- 7 024 223

## Description

### Field of the invention

The present invention relates to the 3^{rd} mobile communication wireless access technical filed, especially to a wireless access system and method which is based on a double embedded microprocessor, supports an Ethernet high-speed interface connected with PC, and could satisfy the demands of high-speed accessing internet in WCDMA/HSDPA networks and support basic voice communication service simultaneously.

### Background of the invention

In information communication field, broadband network technique and wireless mobile communication technique are developing most fast and affecting people most, and the combination of the two techniques is called broadband wireless access technique. The broadband wireless access technique refers to the broadband access technique in which the communication link from a user terminal to a service switching point is a radio link.

From the view of covering scope, the broadband wireless access technique can be divided into three groups: local area broadband wireless access technique, metropolitan area broadband wireless access technique and wide area broadband wireless access technique. But from the view of whether support the mobility of a terminal, the broadband wireless access technique can be divided into groups: mobile broadband wireless access technique and fixed broadband wireless access technique. The mobile broadband wireless access technique refers to the 3^{rd} mobile communication technique (3G), such as WCDMA/HSDPA, CDMA2000 and etc. This kind of mobile communication technique supports the mobility of a terminal and can realize broadband wireless access under the moving state of a terminal, but the access bandwidth may be different from each other under different moving speeds.

The goal of 3G mobile communication system is providing BroadBand-mobile Multimedia Communications, multiple access method mostly adopts CDMA multiple access which belongs to broadband CDMA mobile communication technique. 3G mobile communication system can provide many kinds of high quality multimedia services, can realize seamless cover over the whole world, and has the ability of roaming through the whole world and is compatible with the fixed network. It can make a small portable terminal realize any type of communication at any time and at any where. The standardization work of 3G mobile communication technique is promoted and implemented by 3GPP and 3GPP2 organizations for standardization.

With the commercialized advancement quickening of 3G network, specially the WCDMA/HSDPA network and the rapid development of 3G service internationally, the diversification requirements of terminals, including wireless data card, cell phone, wireless access box are brought. At present, the whole world market has promoted 300 kinds of WCDMA terminal products, wherein 14 kinds of the products support HSDPA (high speed downlink packet access) technique applied to wireless broadband.

But 3G wireless access terminals promoted at present mainly locate in High-end commerce users and business users and can not popularize to ordinary (PC computer) consumers and satisfy the demand of the users in far away geographical environment to voice and broadband data services.

To commerce users, with its demand to mass data service and mobile office, the field leaders including operators, communication industries and specialized data card corporations, notebook computer manufacturers come into the wireless network card market from its respective angles. But at present the wireless data card is only adapted for high-end notebook computer accessing internet and can not satisfy the wireless internet access requirement of common PC users, and wireless mobile office can not be released adequately and popularized due to price influence.

To the business users, the access terminals having the ability of wireless internet access now is mainly wireless routers, which can satisfy the internet access of many PCs or notebook computers, but its interior realization in fact is PC adding on wireless internet access card technical solution, which causes high price and can not satisfy the demand of personal or home user wireless internet access.

To the users of PC computer, the present 3G mobile wireless access terminal realizes wireless internet access function mainly based on connecting wireless MODEM by a PC computer's serial port, but can not utilize the broadband multimedia characteristics of 3G network due to the speed limitation of the serial port. Meanwhile, the requirement of dedicated PC software increases the use bears of users and technique demands.

Although the 3G mobile wireless access terminal using USB ports can reach high speed communication, it can not enable the signal receiving of the wireless access terminal achieve best, so that the communication quality and speed may be affected.

The wireless public telephone, wireless network card, and wireless router promoted now in the market can not be popularized due to its sole function, the separation of the voice and data services, or high price. Specially to the remote area, in order to realize voice and data services in the geography environment wire signal can not reach, the user has to buy two kinds of access terminals, which not only increase the cost but also the technical bears of the user.

In summary, many kinds of factors such as technique, market, resource and competition can make the operators satisfy the various demands of the users meanwhile realize the maximization of the service expansion, and make equipment providers decrease the cost of wireless access terminals and promote benefits and strengthen the competitive power of the products in the market.

Document WO 02/01809 A2 shows a wireless modem, connectable to a user device via a serial port, wherein the user device (computer/laptop) is "wireless unaware" i.e. no wireless communication protocols are implemented in the user device itself; the serial port of the wireless modem receives user data transmitted by the user device (wireline transmission protocol) and sends them out using middleware for converting the data in a corresponding wireless protocol.

### Summary of the invention

Therefore, the present invention provides a WCDMA/GSM/GPRS/EDGE/HSDPA multimode wireless access system and method, which adopts a double embedded microprocessor, supports an Ethernet high speed interface connected with a PC computer, and can satisfy the requirements of HSDPA high speed accessing internet by a PC computer, meanwhile the wireless access system supports basic telephone conversation services.

According to one aspect of the invention, a broadband wireless access system according to claim 1 is provided, comprising: a control subsystem which includes a process module used for processing data, and an interface module connected with the process module and used for connecting user terminals, and the process module invokes background process programs after receiving input parameters from the user terminal through the interface module and transforms them to be an AT command; and an access subsystem which is connected with the control subsystem through an interface and used for analyzing the AT command from the control subsystem through the interface and invoking related internal functions to connect or disconnect the user terminal and a network.

In above mentioned broadband wireless access system, the access subsystem includes: a radio frequency module is used for transmitting and receiving a radio frequency signal, and sending the received radio frequency signal to a baseband module to be processed; and the baseband module is used for performing at least one of the following processes to an upstream and/or downstream radio frequency signal: modulating and demodulating an upstream and downstream air interface signal, channel coding and decoding, encryption/decryption, audio coding and decoding, video coding and decoding, analog/digital conversion, and digital/analog conversion. The access subsystem also includes a power management module used for managing turn on/off power, detecting dynamic voltages and providing power to the system. The access subsystem also may includes a telephone interface sub-module used for generating internal ringing, generating and decoding a double tone multiple frequency signal, and generating a full telephone signal. The access subsystem also may includes a state indicating lamp used for indicating power on, connection, signal strength, and the state of a call.

In above mentioned broadband wireless access system, the interface is a USB interface. The user terminal is a personal computer or a notebook computer. The AT command is a standard or expanded AT command.

In above mentioned broadband wireless access system, the control subsystem includes: a first processor; an Ethernet driving circuit which is connected with a first external device through a RJ45 interface, thereby implementing the data exchange between the first processor and the first external device; and a telephone user interface which is connected with a second external device through a RJ11 interface, thereby implementing the data exchange between the first processor and the first external device. The control subsystem also may include: a serial peripheral interface connected with the telephone user interface; a PCM (pulse code modulation) interface connected with the telephone user interface.

The control subsystem also may include: a DC/DC module used for providing a direct current voltage for the first processor and the telephone user interface; and a USB interface connected with the first processor.

In above mentioned broadband wireless access system, the first processor is a double embedded microprocessor, the first external device includes terminal devices such as a personal computer, a notebook computer, and a personal digital assistant. The second external device is any kind of communication device supporting a RJ11 interface.

In above mentioned broadband wireless access system, the baseband module includes: a second processor; and a power management module connected with the second processor and used for performing current conversion and providing power to the second processor. The baseband module also includes a debugging interface, the second processor is an embedded processor.

In above mentioned broadband wireless access system, the debugging interface includes a JTAG serial port and a UART serial port. The baseband module also includes a USIM card interface and/or a SIM card interface. The control subsystem of the present invention also includes a telephone interface submodule used for generating internal ringing, generating and decoding a double tone multiple frequency signal and generating a whole telephone signal.

The control subsystem mainly realizes system power supply, subscriber line interface circuit (SLIC) conversion, the conversion from a USB signal to a RJ45 signal. The interface module can realize the data function of the internet access at the user PC side and the voice conversation function of the telephone externally connected through a RJ11. Wherein, the control processor (such as an ARM processor) and the access subsystem convert the Ethernet RJ45 interface link layer protocol to USB serial port communication protocol by a USB signal interface, thereby the user terminal PC can realize the data services by accessing internet through RJ 45. The voice services of the user telephone are converted through a SLIC interface. When incoming a call, the access subsystem controls the SLIC to generate a ring tone to inform the user answer the call by the interface connected to the control subsystem, and after the user answering the call, the access subsystem connects the calling voice signal through a PCM bus and a SLIC. The SLIC can realize the voice double direction coding and decoding between the access subsystem and the user telephone and realize voice communication function.

The system power supply of the control subsystem mainly generates the power required by the access module and the control module by converting the direct current power supply input from external by the direct current/ direct current conversion module to satisfy the large current requirement when the baseband of the access subsystem and the radio frequency power amplifying circuit operating.

The radio frequency module includes a transmitting circuit, a receiving circuit, a frequency band and receiving and transmitting switch selection, an antenna and a reference clock signal, which are used for receiving and transmitting a radio frequency signal. The processes performed by the UMTS transmitting circuit are as follows: after through a baseband amplifier and a low pass filter, the UMTS transmitted I/Q modem signal output from the baseband module is up-converted from baseband (BB) to radio frequency (RF) to form a radio frequency transmitting signal. Then the signal is amplified by an automatic gain control amplifier, is band pass filtered, and is sent to a power amplifier to be amplified, and then passes through an isolator, a duplexer, a multimode switch and an antenna in turn and is sent out. In order to accomplish UMTS largest power control, radio frequency energy is coupled between the power amplifier and the isolator to detect a power voltage.

The function of the receiving circuit of the radio frequency module includes: after being filtered by the corresponding saw filter, the WCDMA/GSM frequency band signal from a multimode switch is input into a low noise gain control circuit to be amplified, and then is sent to a down-converter to be converted from RF to BB, and after being filtered by a common baseband low pass filter and being direct current bias corrected, the resulted I/Q baseband signal is amplified by a baseband amplifier and is sent to a baseband module main chip to be processed.

Frequency band and receiving and transmitting switch selection can select between GSM-900RX, GSM-1800RX, GSM-1900RX, GSM-900TX, GSM-1800/1900TX and UMTSRX/TX respectively, which can increase the interval between the working slot and unworking slot of the amplifier. In addition, the GSM-900, GSM-1800 and GSM-1900 emission filter in the circuit can restrain the emitted harmonic wave and increase the receiving interval.

A Reference Clock Signal Temperature Compensated Voltage Controlled (VTVCXO) Oscillator is generated. The oscillator provides an analog reference clock signal of 19.2 MHz to the radio frequency module, the power supply module and the baseband module.

According to the second aspect of the invention, a broadband wireless access method according to claim 12 is provided, including: step S102, a user terminal is connected with a broadband wireless access system through an interface; step S104, initializing the access subsystem and the control subsystem of the broadband wireless access system; step S106, the control subsystem invoking background process programs according to the received parameters input by a user, analyzing the parameters and converting them to an AT command; step S108, the access subsystem analyzing the AT command received from the control subsystem, invoking the related internal functions, setting network, and connecting or disconnecting network; and step S110, if the network connection is established, the IP package of the user terminal being sent to the access subsystem, being transferred on the network by the access subsystem to perform data transmission. The interface is a RJ45 interface.

In the above mentioned method, the step of initializing the access subsystem includes: searching network, registering and processing idle states; waiting and receiving the AT command sent from the control subsystem to control network connection or disconnection; and in response to dial in user or network call, accomplishing basic voice services.

In the above mentioned method, the step of initializing the control subsystem includes: initializing the processor and peripheral hardware of the control subsystem; and initiating an operating system and loading a control module.

Wherein, the control module includes: a WEB service gateway submodule, an AT command analyzing and generating submodule, an IP package transferring module, a serial communication submodule, and a USB driving submodule. The user terminal is a personal computer or a notebook computer.

According to the present invention, the following advantages can be achieved: wireless network control and wireless access can be realized by two embedded processors; data service and voice service can be integrated and user cost can be decreased; an Ethernet interface is used at PC side to adapt the high speed of the broadband wireless mobile network; and the control subsystem in the system and the wireless access subsystem adopt high speed USB buses to adapt the high speed of the broadband wireless mobile network.

Therefore, the system according to the present invention can satisfy user voice and broadband data services simultaneously. The present invention adequately exerts the property of 3G wireless broadband access and satisfies that the common PC terminal users with maximum limit, specially under the Vast territory with a sparse population geographical environment, share rich content and services at any time and any where. The terminal user do not need equipment any dedicated device driver and application software and also do not need concern the technical details of device access operator's network. By the common browser software in a PC computer, the consistency and unity of the user of services can be easily realized.

### Brief description of the accompanying drawings:

Figure 1 is a block showing a broadband wireless access system according to the present invention;
Figure 2 is a block showing a broadband wireless access system according to the embodiment of the present invention;
Figure 3 is a block showing a baseband process module in the access subsystem of the broadband wireless access system;
Figure 4 is a block showing the control subsystem of the broadband wireless access system;
Figure 5 is view of the software architecture of the broadband wireless access system according to the present invention;
Figure 6 is a conversion view of the RJ45-USB interface protocol of the broadband wireless access system according to the embodiment of the present invention;
Figure 7 is a flow chart of the method of the broadband wireless access system according to the present invention;
Figure 8 is a flow chart of setting the broadband mobile network according to the present invention.

### Embodiments for carrying out the present invention

The embodiments of the present invention will be described below.

In view of the characteristics of WCDMA/HSDPA broadband networks, a system and method for implementing 3G network mobile broadband access and voice service based on a double embedded processor is proposed. The main technical problems to be analyzed are as follows: the UI interface between a system and a host (PC/notebook computer), network parameter setting, indication of a connection control communication state, IP packet transparent transmission and protocol conversion and so on; communication control between the control subsystem and wireless access subsystem, network setting, connection establishment, conversion between an Ethernet interface and a USB interface; expanding and analyzing of the wireless access system to the AT command, wireless network setting, connection establishment, voice service and data and voice concurrent service and so on.

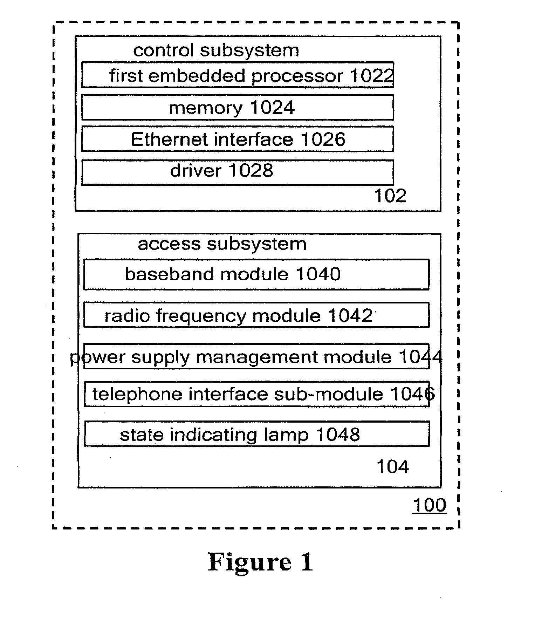

Figure 1 is a block showing a broadband wireless access system of the present invention. As shown in figure 1, the broadband wireless access system 100 includes: a control subsystem 102, including a process module (a first embedded processor) 1022, a memory 1024, a interface module (an Ethernet interface) 1026 and a driver 1028, which are used for invoking background process programs and converting and generating an AT command after receiving the input parameters from the user terminal; and an access subsystem 104 connected with the control subsystem through an interface, which is used for analyzing the AT command received from the control subsystem through an interface, and invoking related internal functions to make the user terminal connect or disconnect with a network.

Wherein, the access subsystem 104 includes: a baseband module 1040, including a second embedded processor, a memory and a baseband signal processor, which are used for modulating and demodulating a upstream/downstream air interface signal, channel coding and decoding, encryption/decryption; and a radio frequency module 1042, including a transmitting circuit, a receiving circuit, a frequency band and receiving and transmitting switch selection, an antenna and a reference block signal, which are used for transmitting and receiving a radio frequency signal.

In addition, the access subsystem 104 also includes: a power supply management module 1044 used for managing turn on power, detecting a dynamic voltage, and providing power to modules; a telephone interface submodule 1046 used for generating internal ring, generating and decoding a double tone multiple frequency signal, and generating a full telephone signal; and a state indication lamp 1048 used for indicating power turn on, connection, signal strengthen and calling state.

In the system 100 implementing broadband wireless access, the interface is a USB interface, the user terminal is a personal computer or a notebook computer.

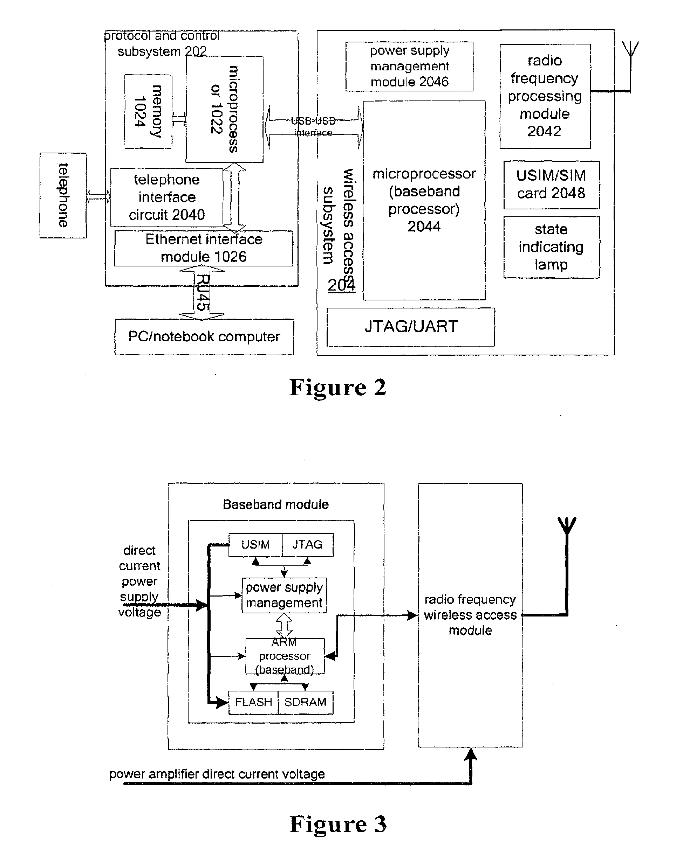

Figure 2 is a block showing the broadband wireless access system according to the embodiment of the present invention. As shown in figure 2, how to realize high speed wireless access, network setting and connection control processes according to the embodiments of present invention are indicated. Wherein, it is assumed that a user is a legal user of a WCDMA/HSDPA/GSM broadband mobile operator and has a USIM/SIM card provided by the operator, and has the right of wireless data and voice service.

The wireless access subsystem 204 according to the embodiment mainly contains a radio frequency module 2042 and a baseband module 2044. Wherein, the radio frequency module 2042 mainly contains a transmitting circuit, a receiving circuit, a frequency band and transmitting and receiving switch selection, an antenna and a reference clock signal and so on. The radio frequency link process chip groups in the radio frequency transmitting and receiving circuit, a power amplifying circuit (PA), a band pass filter (BPF), a phase lock loop (PLL), a voltage controlled oscillator (VCO), an antenna switch and the like consist a radio frequency transmitting and receiving system of the wireless access module. The radio frequency module 2042 can complete the receiving of the radio frequency signals in the WCDMA/HSDPA network.

Wherein, the transmitting process of the radio frequency module 2042 is as follows:
(I) a UMTS (WCDMA/HSDPA) network transmitting process: after passing through a baseband amplifier and a low pass filter, the UMTS transmitted I/Q modulating signal from the baseband module is up-converted from BB to RF so as to form a radio frequency transmitting signal. The signal is amplified by an automatic gain control amplifier, then being band pass filtered, and then is sent to a power amplifier to be amplified, and finally passes through an isolator, a duplexer, a multimode switch and an antenna in turn and is sent out. In order to achieving the UMTS maximum power control, radio frequency energy is coupled between the power amplifier and the isolator to detect the power voltage.
(II) a GSM network transmitting process: after being amplified by a baseband amplifier, being low pass filtered and being DC bias corrected, the GSM transmitted I/Q modulating signal from the baseband module is up-converted from baseband (BB) to intermediate frequency (IF), and the formed intermediate frequency is sent to a power amplifier to be amplified after being polar modulated by a bias phase lock loop, and finally passes through the multimode switch and the antenna and is sent out.

In addition, the receiving processes of the radio frequency module 2042 are as follows:
(1) a UMTS (WCDMA/HSDPA) network receiving process: after being amplified by low noise amplifier (LNA) capable of performing gain control and filtered by a receiving band pass filter, the UMTS radio frequency receiving signal from the duplexer is sent to a down-converter to be converted from radio frequency (RF) to baseband (BB), and after being filtered by a low pass filter, the formed I/Q baseband signal is amplified by the baseband amplifier, and then is sent to the baseband module to be processed.
(2) a GSM network receiving process: after being filtered by the corresponding saw filter, the GSM frequency band signal from the multimode switch is signal amplified by the LNA (including gain control), and then sent to the down-converter to be converted from radio frequency (RF) to baseband (BB). And after being filtered by a common baseband low pass filter and being DC bias corrected, the formed I/Q baseband signal is amplified by a baseband amplifier and is sent to a MSM6280 main chip to be processed.

Wherein, the reference clock signal provides an analog reference clock signal to the radio frequency module 2042, the baseband module 2044 and the power supply module 2046. The antenna switch is selected between the GSM and UMTS signal transmitting and receiving, and meanwhile can amplify the interval between the working slot and non-working slot of a power amplifier.

Figure 3 is a block showing the baseband process module in the access subsystem of the broadband wireless access system. As shown in figure 3, the baseband part of the wireless access module mainly performs the following functions:
(1) WCDMA/HSDPA baseband signal process and GSM/GPRS/EDGE baseband signal process;
(2) storage (Flash, SRAM, SDRAM) access control;
(3) power supply management: direct current power supply is suffered from direct current/direct current (DC/DC) conversion (various direct voltage output) and is sent to the power amplifier, the power supply management module and the baseband (processor) module to supply power; and
(4) debugging interfaces such as JTAG and UART, USIM card or SIM card interface.

A digital baseband chip performs all the WCDMA/HSDPA and the GSM/GPRS/EDGE baseband signal process functions mainly by embedded processors such as a ARM serial processor core together with two DSPs, including the modulating and demodulating an upstream and downstream signal, channel coding and decoding, audio video coding and decoding, A/D, D/A and so on.

The baseband processor supports two kinds of expanded data buses. The one is used for high speed data transmission, supporting SRAM, SDRAM and BURST NOR FLASH, the other is used for supporting slower external devices, such as NAND flash, SRAM and so on, and for storing program codes and data.

Wherein, the power supply management module 2046 is in charge of all power supply management functions and can receives programs and control to output various direct voltages or currents needed. A SIM/USIM card interface 2048 performs reading and writing access and control to the SIM/USIM card and so on, and the power supply management module supplies power to SIM/USIM card to adapt for a demanded level.

The control subsystem mainly realizes system power supply, subscriber line interface circuit (SLIC) conversion, the conversion from a USB signal to a RJ45 signal. The interface module can realize the data function of accessing internet at user PC side and the voice conversation function of the telephone externally connected through a RJ11. Wherein, the control processor (such as a ARM processor) and the access subsystem convert the Ethernet RJ45 interface link layer protocol to USB serial port communication protocol by a USB signal interface, thereby the PC at the user side can realize the data services by accessing internet through RJ45. The voice services of the user telephone are converted through a SLIC interface. When incoming a call, the access subsystem controls the SLIC to generate a ring tone to inform the user answer the call by the interface connected to the control subsystem, and after the user answering the call, the access subsystem connects the calling voice signal through a PCM bus and a SLIC connection. The SLIC can realize the voice double direction coding and decoding between the access subsystem and the user telephone and realize voice communication function.

The system power supply of the control subsystem mainly generates the power required by the access module and the control module by converting the direct current power supply input from external by the direct current/ direct current conversion module to satisfy the large current requirement when the baseband of the access subsystem and the radio frequency power amplifying circuit operating.

The radio frequency module includes a transmitting circuit, a receiving circuit, a frequency band and receiving and transmitting switch selection, an antenna and a reference clock signal, which are used for receiving and transmitting a radio frequency signal. The processes performed by the UMTS transmitting circuit are as follows: after passing through a baseband amplifier and a low pass filter, the UMTS transmitted I/Q modem signal output from the baseband module is up-converted from baseband (BB) to radio frequency (RF) to form a radio frequency transmitting signal. Then the signal is amplified by an automatic gain control amplifier, is band pass filtered, and is sent to a power amplifier to be amplified, and then passes through an isolator, a duplexer, a multimode switch and an antenna in turn and is sent out. In order to accomplish UMTS largest power control, radio frequency energy is coupled between the power amplifier and the isolator to detect a power voltage.

The function of the receiving circuit of the radio frequency module includes: after being filtered by the corresponding saw filter, the WCDMA/GSM frequency band signal from the multimode switch is input into a low noise gain control circuit to be amplified, and then is sent to a down-converter to be converted from RF to BB, and after being filtered by a common baseband low pass filter and being direct current bias corrected, the resulted I/Q baseband signal is amplified by a baseband amplifier and is sent to a baseband module main chip to be processed.

The frequency band and receiving and transmitting switch selection can select between GSM-900RX, GSM-1800RX, GSM-1900RX, GSM-900TX, GSM-1800/1900TX and UMTSRX/TX respectively, which can increase the interval between the working slot and unworking slot of the power amplifier. In addition, the GSM-900, GSM-1800 and GSM-1900 emission filter in the circuit can restrain the emitted harmonic wave and increase the receiving interval.

Reference Clock Signal Temperature Compensated Voltage Controlled Oscillators is generated. The oscillator provides an analog reference clock signal of 19.2 MHz to the radio frequency module, the power supply module and the baseband module.

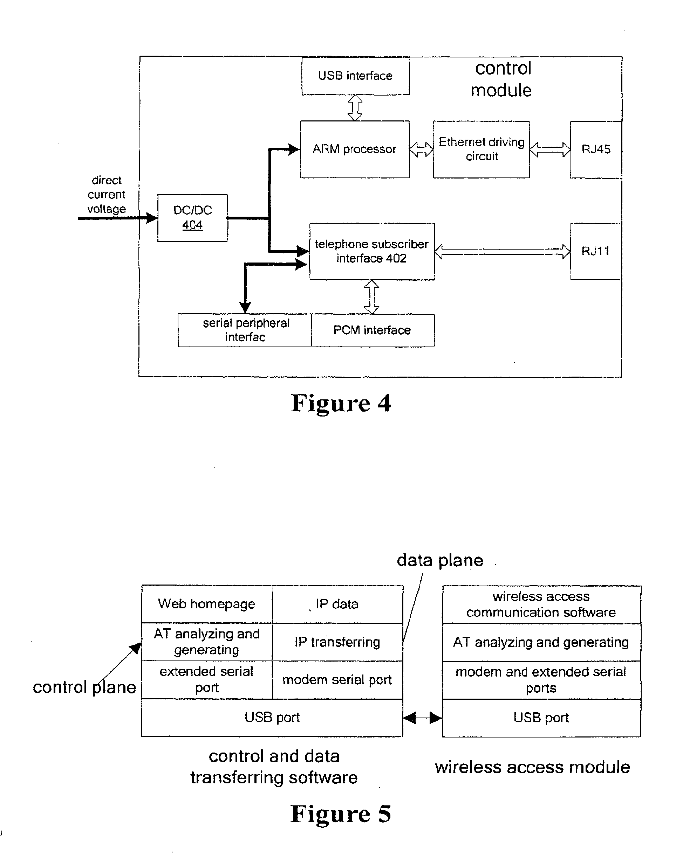

Figure 4 is a block showing the control subsystem 202 of the broadband wireless access system. As shown in figure 4, in the embodiments of the present invention, the embedded processor of the control subsystem 202 adopts ARM serial processors. The control subsystem 202 mainly realizes system power supply, subscriber line interface circuit (SLIC) conversion, and the conversion from a USB signal to a RJ45 signal. The control subsystem 202 can realize the data service function of accessing internet at user PC/notebook computer and the voice conversation function of the telephone externally connected through a RJ11.

In the embedded processor of the control subsystem, an Ethernet controller is included and a network accelerator NAT (network address conversion) is adopted to perform the conversion of the network packages. An Ethernet driving circuit is connected with the baseband processor and the Ethernet controller, and is controlled by the baseband processor. The main functions are conformed to IEEE802.3/802.3u standard, including physical coding sublayer, physical medium attachment, twisted pair physical medium sublayer, 10BASE-TX coder/decoder and twisted pair medium access unit and so on.

Wherein, the process of realizing the user voice service includes: controlling and converting the voice service of a user telephone is performed by a telephone user interface circuit. A telephone user interface module 402 provides a whole analog telephone interface to make an ordinary telephone be used in a mobile communication network. When incoming a call, the baseband process module 2044 of the wireless access subsystem 204 controls the subscriber line interface to generate a ring tone by a serial peripheral interface (SPI) and inform the user answer the call. After the user answering the call, the calling voice signal is connected by a PCM bus and a subscriber line interface module 402. The subscriber line interface module 402 can realize the voice double direction coding and decoding between the baseband module and the user telephone, and realize voice communication function.

A DC/DC module 404 make a externally connected input power supply generate the power needed by the wireless access subsystem 204 and the control subsystem 202 by conversion.

The descriptions of the figures above mentioned show the functional units of the broadband wireless access system 100 according to the embodiment of the present invention. The software architecture and protocol accomplishment flows are indicated by referencing the functional units of the system.

Figure 5 is a software architecture view showing the broadband wireless access system according to the present invention. The software of the control subsystem in the broadband wireless access system is one of the key points of the present invention. That is, a bridge is provided between a user and a broadband mobile network by providing a internet access agent software to a PC/notebook computer. The PC/notebook computer user can only support a browser for common propose without installing any software. The network card connected to the system of the present invention and driving programs can adopt present mature products without considering reprogramming, and can realize wireless data service transparently for the user by the present functions of an operating system, for example, data services such as accessing internet, downloading and so on. An application software can be divided into three software sub-modules that is a user plane module, a control plane module and a data plane module.

Wherein, the user plane software module refers to a general purpose browser software, which is used for turning on the network setting homepage provided by the system of the present invention and providing the setting of the related parameters of the mobile network to be connected by the user, such as the contents for realizing the logical functions described as follows.

The core of the operating system of the control plane adopts uClinux operating system. The control plane function includes Ethernet interface control, immediate IP package routing and transferring and the control function of the wireless access module.

Since the connection between the wireless access subsystem and the control subsystem is based on a USB interface, the control subsystem provides a USB driver therein and makes the USB driver to be serial ports to perform modem data transmission and access control. Meanwhile, since there are many functions which can not be supported by a standard AT command in the broadband access process, in order to not affecting the modem data transmission and standard access control in the communication process, the control subsystem of the present invention adds a virtual expanded serial port and maps it to the same USB physical port to transfer a network control expanded AT command.

The function of the control plane includes: analyzes the web page received from a user, extracts network setting parameters, converts the network setting parameters into an AT command by background processing program such as CGI (common gateway interface) application program, and sends it to the wireless access module through a expanded serial driver and a USB physical port to perform wireless access control.

The data plane: after setting correct network correctly and establishing network connection, the application data of a PC/notebook computer is packaged into IP packages, then they are sent to the IP transferring and routing module of the control subsystem through an Ethernet interface, and are sent to the wireless access subsystem through a Modem standard serial port and a USB physical port, and then are transferred to internet by the wireless access communication software.

The network configure program in the control subsystem adopts a C/S server or WEB settings based on HTTP protocol. The application software (browser) at the PC/notebook computer side inter-exchanges with the Ethernet card interface conversion control module based on the TCP/IP protocol by a high level application command, and the Ethernet card interface conversion control module analyzes, interprets, performs and transparently transfers according to the corresponding command and accomplishes user data service functions, such as setting and turning on a serial port, establishing functions such as network connection and so on.

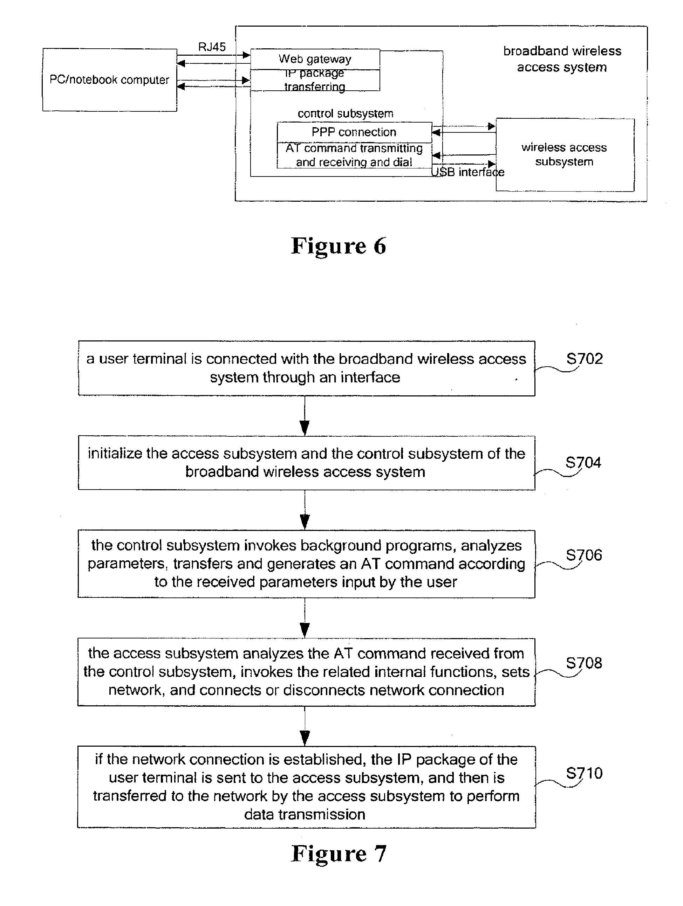

Figure 6 is a RJ45-USB interface protocol conversion view of the broadband wireless access system according to the embodiment of the present invention. As shown in figure 6, how to accomplish the RJ45-USB interface protocol and interface conversion function of the control subsystem software of the present invention is indicated.

Wherein, the control subsystem software makes communication based on a standard and extended AT command through a USB physical interface and a wireless access subsystem; the control subsystem is connected with the network interface of a PC/notebook computer through a RJ45 interface. The functions of the control subsystem software include: transmitting and receiving an AT command, data connection dial, embedded web server homepage (the user sets the wireless access subsystem by the homepage to accomplish the set of network connection), IP data package transferring function, transferring IP data packages from a user computer to the wireless access module after establishing the data connection.

Figure 7 is a flow chart showing a method for the broadband wireless access system according to the present invention. As shown in figure 7, the method for the broadband wireless access system includes:
S702, a user terminal is connected with the broadband wireless access system through an interface;
S704, initialize the access subsystem and the control subsystem of the broadband wireless access system;
S706, the control subsystem invokes background programs, analyzes parameters, transfers and generates an AT command according to the received parameters input by the user;
S708, the access subsystem analyzes the AT command received from the control subsystem, invokes the related internal functions, sets network, and connects or disconnects network connection; and
S710, if the network connection is established, the IP package of the user terminal is sent to the access subsystem, and then is transferred to the network by the access subsystem to perform data transmission.

As follows, the system and method are illustrated by the process of the user's data services in combination with figures 4 and 6.

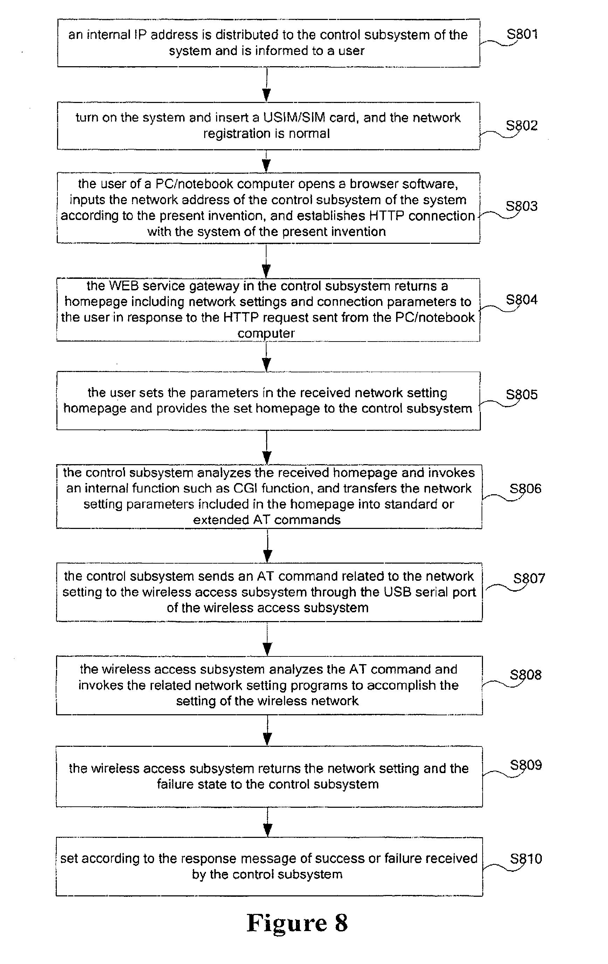

As shown in figure 8, the process of setting the broadband mobile network according to the present invention includes:
S801, an internal IP address is distributed to the control subsystem of the system and is informed to a user;
S802, turn on the system of the present invention and insert a USIM/SIM card, and the network registration is normal;
S803, the user of a PC/notebook computer opens a browser software, inputs the network address of the control subsystem of the system according to the present invention, and establishes HTTP connection with the system of the present invention;
S804, the WEB service gateway in the control subsystem returns a homepage including network settings and connection parameters to the user in response to the HTTP request sent from the PC/notebook computer;
S805, the user sets the parameters in the received network setting homepage and provides the set homepage to the control subsystem;
S806, the control subsystem analyzes the received homepage and invokes an internal function such as CGI function, and transfers the network setting parameters included in the homepage into a standard or extended AT command;
S807, the control subsystem sends an AT command related to the network setting to the wireless access subsystem through the USB serial port of the wireless access subsystem;
S808, the wireless access subsystem analyzes the AT command and invokes the related network setting programs to accomplish the setting of the wireless network;
S809, the wireless access subsystem returns the network setting and the failure state to the control subsystem; and
S810, set according to the response message of success or failure received by the control subsystem.

Wherein, if success, return a refreshed page newly set to the user; if fail, return an original page to the user and let the user reset it.

The above mentioned network setting parameters include information like user name, pin, login number, DNS, APN and so on.

In the embodiment of the present invention, the operating processes like establishing network connection, disconnecting network connection, and network selection are similar with the above processes.

After successfully establishing the network connection, when the user accesses internet, the application layer or HTTP protocol messages and data are sent to the control subsystem after they are packaged according to TCP/IP protocol. The control subsystem makes no decision after receiving IP packages, and repackaged the IP packages into PPP frame form directly, and the repackaged packages are transparently sent to the wireless access subsystem through a USB interface and transferred to the internet by the wireless access subsystem, therefore the data services of accessing internet of the user are finished. Therefore, during the user accessing internet, the user can make a call or answer a call through the wireless access subsystem at the same time.

The embodiment of the present invention is described under WCDMAIHSDPAIGSM network environment, and the system and method of the present invention can be applied to other 3G networks such as CDMA 2000, TD-CDMA.

The above are only the preferred embodiments of the present invention and are not used for limiting the present invention. For those skilled in the art, various amendments and changes can be made to the present invention. Any amendment, equivalent alternative and improvement within the principle of the present invention should be included in the protection scope of the present invention. The scope of the present invention is solely defined by the subject-matter of the independent claims.

## Claims

1. A broadband wireless access system (100) **characterized by** including:
a control subsystem (102) which includes a process module (1022) configured to process data, and an interface module connected with the process module (1022) and configured to connect an user terminal, wherein the process module (1022) invokes background process programs after receiving input parameters from the user terminal through the interface module and transforms them to be an AT command, the input parameters comprise network setting parameters which are extracted from a web page received from the user terminal; and
an access subsystem (104) which is connected with the control subsystem (102) through an interface and configured to analyze the AT command from the control subsystem (102) through the interface, and invoke related internal functions to connect or disconnect the user terminal and a cellular network, wherein the interface is a USB interface;
wherein the control subsystem (102) includes: a first processor as the process module (1022), an Ethernet driving circuit (1026) connected with a first external device as the user terminal through a RJ45 interface as the interface module, thereby implementing the data exchange between the first processor and the first external device.

2. The broadband wireless access system (100) according to Claim 1, **characterized in that** the access subsystem (104) includes a radio frequency module (1042) and a baseband module (1040), wherein
the radio frequency module (1042) is configured to transmit and receive a radio frequency signal, and transmit the received radio frequency signal to the baseband module; and
the baseband module (1040) is configured to perform at least one of the following processes to an upstream and/or downstream radio frequency signal: modulating and demodulating upstream and downstream air interface signals, channel coding and decoding, encryption/decryption, audio coding and decoding, video coding and decoding, analog/digital conversion, and digital/analog conversion.

3. The broadband wireless access system (100) according to Claim 2, **characterized in that** the access subsystem also includes: a power management module (1044) configured to manage turn on/off power, detect dynamic voltages and provide power to the system; a telephone interface sub-module (1046) configured to generate internal ringing, generate and decode a double tone multiple frequency signal, and generate a full telephone signal; and state indicating lamp configured to indicate power on, connection, signal strength, and the state of a call.

4. The broadband wireless access system (100) according to Claim 1, **characterized in that** the user terminal is a personal computer or a notebook computer, and the AT command is a standard or expanded AT command.

5. The broadband wireless access system (100) according to anyone of Claims 1-4, **characterized in that** the control subsystem includes:
a telephone user interface connected with a second external device through a RJ11 interface, thereby implementing the data exchange between the first processor and the second external device.

6. The broadband wireless access system (100) according to Claim 1, **characterized in that** the control subsystem also includes:
a serial peripheral interface connected with the telephone user interface;
a PCM interface connected with the telephone user interface;
a DC/DC module configured to provide a direct current voltage for the first processor and the telephone user interface; and
a USB interface connected with the first processor.

7. The broadband wireless access system (100) according to Claim 1, **characterized in that** the first processor is an embedded microprocessor, the first external device is selected from the group including a personal computer, a notebook computer, and a personal digital assistant, and the second external device is any kind of communication device supporting a RJ11 interface.

8. The broadband wireless access system (100) according to Claim 2, **characterized in that** the baseband module (1040) includes:
a second processor; and
a power management module (1044) connected with the second processor and configured to perform current conversion and provide power to the second processor.

9. The broadband wireless access system (100) according to Claim 8, **characterized in that** the baseband module (1040) also includes a debugging interface, the second processor is an embedded processor.

10. The broadband wireless access system (100) according to Claim 9, **characterized in that** the debugging interface includes a JTAG serial port and a UART serial port.

11. The broadband wireless access system (100) according to Claims 8 or 9, **characterized in that** the baseband module (1040) also includes a USIM card interface and/or a SIM card interface.

12. A broadband wireless access method **characterized by** including the following steps:
Step S102, a user terminal being connected with a broadband wireless access system (104) through an interface;
Step S104, initializing the access subsystem (104) and the control subsystem (102) of the broadband wirelessaccess system (100), wherein the access subsystem (104) is connected with the control subsystem (102) through a USB interface;
Step S106, the control subsystem (102) invoking background process programs according to the received parameters input by a user, analyzing the parameters and converting them into an AT command, wherein the parameters comprise network setting parameters which are extracted from a web page received from the user terminal;
Step S108, the access subsystem (104) analyzing the AT command received from the control subsystem (102), invoking the related internal functions, setting cellular network, and connecting or disconnecting network connection; and
Step S110, if the network connection is established, the IP package of the user terminal being sent to the access subsystem (104) and being transferred on the cellular network by the access subsystem (104) to perform data transmission
wherein the control subsystem (102) includes: a first processor as the process module (1022); an Ethernet driving circuit connected with a first external device as the user terminal through a RJ45 interface as the interface module, thereby implementing the data exchange between the first processor and the first external device.

13. The broadband wireless access method according to Claim 12, **characterized in that** the interface is a RJ45 interface.

14. The broadband wireless access method according to Claim 12, **characterized in that** the step of initializing the access subsystem (104) includes:
searching network, registering and processing idle states;
waiting and receiving the AT command sent from the control subsystem to control network connection or disconnection; and
In response to dial in user or network call, accomplishing basic voice services.

15. The broadband wireless access method according to Claim 12, **characterized in that** the step of initializing the control subsystem (102) includes:
initializing the processors and peripheral hardware of the control subsystem (102); and initiating an operating system and loading the control module.

## Patentansprüche

1. Drahtlosbreitband-Zugriffssystem (100), **dadurch gekennzeichnet, dass** es umfasst:
ein Steuersubsystem (102), das ein Verarbeitungsmodul (1022) enthält, das dazu konfiguriert ist, Daten zu verarbeiten, und ein Schnittstellenmodul, das mit dem Verarbeitungsmodul (1022) verbunden und dazu konfiguriert ist, mit einer Nutzerstation zu verbinden, wobei das Verarbeitungsmodul (1022) Hintergrundprozessprogramme nach Empfangen von Eingabeparametern von der Nutzerstation durch das Schnittstellenmodul aufruft und diese so transformiert, dass sie ein AT-Befehl sind, wobei die Eingabeparameter Netzwerkeinstellungsparameter umfassen, die aus einer Webseite, die von der Nutzerstation empfangen wird, entnommen sind;
ein Zugriffssubsystem (104), das mit dem Steuersubsystem (102) durch eine Schnittstelle verbunden ist und dazu konfiguriert ist, den AT-Befehl von dem Steuersubsystem (102) durch die Schnittstelle zu analysieren und zugehörige interne Funktionen zum Verbinden oder Trennen der Nutzerstation und eines zellularen Netzwerks aufzurufen, wobei die Schnittstelle eine USB-Schnittstelle ist;
wobei das Steuersubsystem (102) enthält: einen ersten Prozessor als das Verarbeitungsmodul (1022) und eine Ethernet-antreibende Schaltung (1026), die mit einer ersten externen Vorrichtung als die Nutzerstation durch eine RJ45-Schnittstelle als das Schnittstellenmodul verbunden ist, wodurch der Datenaustausch zwischen dem ersten Prozessor und der ersten externen Vorrichtung implementiert ist.

2. Drahtlosbreitband-Zugriffssystem (100) nach Anspruch 1, **dadurch gekennzeichnet, dass** das Zugriffssubsystem (104) ein Funkfrequenzmodul (1042) und ein Basisbandmodul (1040) enthält, wobei
das Funkfrequenzmodul (1042) dazu konfiguriert ist, ein Funkfrequenzsignal zu übertragen und zu empfangen, und das empfangene Funkfrequenzsignal an das Basisbandmodul zu übertragen; und
das Basisbandmodul (1040) dazu konfiguriert ist, zumindest einen der folgenden Prozesse an einem Upstream- und/oder Downstream-Funkfrequenzsignal auszuführen: Modulieren und Demodulieren von Upstream- und Downstream-Luftschnittstellensignalen, Kanalkodieren und -dekodieren, Verschlüsselung/Entschlüsselung, Audiokodieren und -dekodieren, Videokodieren und -dekodieren, Analog/Digital-Wandlung, und Digital/Analog-Wandlung.

3. Drahtlosbreitband-Zugriffssystem (100) nach Anspruch 2, **dadurch gekennzeichnet, dass** das Zugriffssubsystem ferner enthält: ein Leistungsverwaltungsmodul (1044), das dazu konfiguriert ist, An-/Ausschalt-Leistung zu verwalten, dynamische Spannungen zu erfassen und dem System Leistung bereitzustellen; ein Telefonschnittstellensubmodul (1046), das dazu konfiguriert ist, internes Rufen zu generieren, ein Doppelton-Multifrequenzsignal zu generieren und zu dekodieren, und ein volles Telefonsignal zu generieren; und eine Zustandsanzeigelampe, die dazu konfiguriert ist, Einschaltung, Verbindung, Signalstärke und den Zustand eines Anrufs anzuzeigen.

4. Drahtlosbreitband-Zugriffssystem (100) nach Anspruch 1, **dadurch gekennzeichnet, dass** die Nutzerstation ein Personal-Computer oder ein Notebook-Computer ist und der AT-Befehl ein Standard- oder erweiterter AT-Befehl ist.

5. Drahtlosbreitband-Zugriffssystem (100) nach einem der Ansprüche 1 bis 4, **dadurch gekennzeichnet, dass** das Steuersubsystem enthält:
eine Telefonnutzerschnittstelle, die mit einer zweiten externen Vorrichtung durch eine RJ11-Schnittstelle verbunden ist, wodurch der Datenaustausch zwischen dem ersten Prozessor und der zweiten externen Vorrichtung implementiert ist.

6. Drahtlosbreitband-Zugriffssystem (100) nach Anspruch 1, **dadurch gekennzeichnet, dass** das Steuersubsystem ferner enthält:
eine serielle Peripherieschnittstelle, die mit der Telefonnutzerschnittstelle verbunden ist;
eine PCM-Schnittstelle, die mit der Telefonnutzerschnittstelle verbunden ist;
ein DC/DC-Modul, das dazu konfiguriert ist, eine Gleichstromspannung für den ersten Prozessor und die Telefonnutzerschnittstelle bereitzustellen; und
eine USB-Schnittstelle, die mit dem ersten Prozessor verbunden ist.

7. Drahtlosbreitband-Zugriffssystem (100) nach Anspruch 1, **dadurch gekennzeichnet, dass** der erste Prozessor ein eingebetteter Mikroprozessor ist, die erste externe Vorrichtung aus der Gruppe, umfassend einen Personal-Computer, einen Notebook-Computer und einen Personal-Digital-Assistent, ausgewählt ist und die zweite externe Vorrichtung irgendeine Art von Kommunikationsvorrichtung ist, die eine RJ11-Schnittstelle unterstützt.

8. Drahtlosbreitband-Zugriffssystem (100) nach Anspruch 2, **dadurch gekennzeichnet, dass** das Basisbandmodul (1040) enthält:
einen zweiten Prozessor; und
ein Leistungsverwaltungsmodul (1044), das mit dem zweiten Prozessor verbunden ist und dazu konfiguriert ist, Spannungswandlung auszuführen und dem zweiten Prozessor Leistung bereitzustellen.

9. Drahtlosbreitband-Zugriffssystem (100) nach Anspruch 8, **dadurch gekennzeichnet, dass** das Basisbandmodul (1040) auch eine Debugging-Schnittstelle enthält, wobei der zweite Prozessor ein eingebetteter Prozessor ist.

10. Drahtlosbreitband-Zugriffssystem (100) nach Anspruch 9, **dadurch gekennzeichnet, dass** die Debugging-Schnittstelle einen seriellen JTAG-Port und einen seriellen UART-Port enthält.

11. Drahtlosbreitband-Zugriffssystem (100) nach Anspruch 8 oder 9, **dadurch gekennzeichnet, dass** das Basisbandmodul (1040) auch eine USIM-Card Schnittstelle und/oder eine SIM-Card Schnittstelle enthält.

12. Drahtlosbreitband-Zugriffsverfahren, **dadurch gekennzeichnet, dass** es die folgenden Schritte enthält:
Schritt S102, in dem eine Nutzerstation mit einem Drahtlosbreitband Zugriffssystem (104) durch eine Schnittstelle verbunden wird;
Schritt S104, der das Zugriffssubsystem (104) und das Steuersubsystem (102) des Drahtlosbreitband-Zugriffssystems (100) initialisiert, wobei das Zugriffsubsystem (104) mit dem Steuersubsystem (102) durch eine USB-Schnittstelle verbunden ist;
Schritt S106, in dem das Steuersubsystem (102) gemäß den von einem Nutzer empfangenen Eingabeparametern Hintergrundprozessprogramme aufruft, die die Parameter analysieren und sie in einen AT-Befehl umwandeln, wobei die Parameter Netzwerkeinstellungsparameter umfassen, die aus einer Webseite, die von der Nutzerstation empfangen wird, entnommen werden;
Schritt S108, in dem das Zugriffssubsystem (104) den AT-Befehl, der von dem Steuersubsystem (102) empfangen wird, analysiert, die zugehörigen internen Funktionen aufruft, ein zellulares Netzwerk setzt und Netzwerkverbindungen verbindet oder löst; und
Schritt S110, in dem, wenn die Netzwerkverbindung aufgebaut ist, das IP-Paket der Nutzerstation an das Zugriffssubsystem (104) gesendet wird und auf dem zellularen Netzwerk von dem Zugriffssubsystem (104) übertragen wird, um Datenübermittlung auszuführen;
wobei das Steuersubsystem (102) enthält: einen ersten Prozessor als das Verarbeitungsmodul (1022); eine Ethernet-antreibende Schaltung, die mit einer ersten externen Vorrichtung als die Nutzerstation durch eine RJ45-Schnittstelle als das Schnittstellenmodul verbunden ist, wodurch der Datenaustausch zwischen dem ersten Prozessor und der ersten externen Vorrichtung implementiert ist.

13. Drahtlosbreitband-Zugriffsverfahren nach Anspruch 12, **dadurch gekennzeichnet, dass** die Schnittstelle eine RJ45 Schnittstelle ist.

14. Drahtlosbreitband-Zugriffsverfahren nach Anspruch 12, **dadurch gekennzeichnet, dass** der Schritt des Initialisierens des Zugriffsubsystems (104) enthält:
Suchen eines Netzwerks, Registrieren und Verarbeiten von Leerlauf-Zuständen;
Warten und Empfangen des AT-Befehls, der von dem Steuersubsystem gesendet wird, um Netzwerkverbinden oder-trennen zu steuern; und
in Antwort auf Einwahl eines Nutzer oder Netzwerk-Anrufs, Durchführen von grundlegenden Sprachdiensten.

15. Drahtlosbreitband-Zugriffsverfahren nach Anspruch 12, **dadurch gekennzeichnet, dass** der Schritt des Initialisierens des Steuersubsystems (102) enthält:
Initialisieren des Prozessors und peripherer Hardware des Steuersubsystems (102); und
Initiieren eines Betriebssystems und Laden des Steuermoduls.

## Revendications

1. Système d'accès sans fil à large bande (100) **caractérisé en ce qu'**il comprend :
un sous-système de contrôle (102) qui comprend un module de traitement (1022) configuré pour traiter des données, et un module d'interface connecté au module de traitement (1022) et configuré pour se connecter à un terminal utilisateur, dans lequel le module de traitement (1022) appelle des programmes de traitement d'arrière-plan après avoir reçu des paramètres d'entrée en provenance du terminal utilisateur par l'intermédiaire du module d'interface et les transforme en commande AT, les paramètres d'entrée comprennent des paramètres d'établissement de réseau qui sont extraits d'une page Web reçue en provenance du terminal utilisateur ; et
un sous-système d'accès (104) qui est connecté au sous-système de contrôle (102) par l'intermédiaire d'une interface et configuré pour analyser la commande AT en provenance du sous-système de contrôle (102) par l'intermédiaire de l'interface, et appeler des fonctions internes liées pour connecter ou déconnecter le terminal utilisateur et un réseau cellulaire, dans lequel l'interface est une interface USB ;
dans lequel le sous-système de contrôle (102) comprend : un premier processeur en tant que module de traitement (1022), un circuit d'attaque Ethernet (1026) connecté au premier dispositif externe en tant que terminal utilisateur par l'intermédiaire d'une interface RJ45 en tant que module d'interface, implémentant ainsi l'échange de données entre le premier processeur et le premier dispositif externe.

2. Système d'accès sans fil à large bande (100) selon la revendication 1, **caractérisé en ce que** le sous-système d'accès (104) comprend un module radiofréquence (1042) et un module de bande de base (1040), dans lequel
le module radiofréquence (1042) est configuré pour transmettre et recevoir un signal radiofréquence, et transmettre le signal radiofréquence reçu au module de bande de base ; et
le module de bande de base (1040) est configuré pour réaliser au moins l'un des traitements suivants sur un signal radiofréquence montant et/ou descendant : une modulation et une démodulation de signaux d'interface radio montant et descendant, un codage et un décodage de canal, un chiffrement/déchiffrement, un codage et un décodage audio, un codage et un décodage vidéo, une conversion analogique/numérique et une conversion numérique/analogique.

3. Système d'accès sans fil à large bande (100) selon la revendication 2, **caractérisé en ce que** le sous-système d'accès comprend également : un module de gestion d'alimentation (1044) configuré pour gérer l'activation/la désactivation de l'alimentation, détecter des tensions dynamiques et fournir une alimentation au système ; un sous-module d'interface téléphonique (1046) configuré pour générer une sonnerie interne, générer et décoder un signal multifréquence à deux tonalités, et générer un signal téléphonique complet ; et un voyant d'indication d'état configuré pour indiquer une activation, une connexion, une intensité de signal et l'état d'un appel.

4. Système d'accès sans fil à large bande (100) selon la revendication 1, **caractérisé en ce que** le terminal utilisateur est un ordinateur personnel ou un ordinateur portable, et la commande AT est une commande AT type ou étendue.

5. Système d'accès sans fil à large bande (100) selon l'une quelconque des revendications 1 à 4, **caractérisé en ce que** le sous-système de contrôle comprend :
une interface utilisateur téléphonique connectée à un second dispositif externe par l'intermédiaire d'une interface RJ11, implémentant ainsi l'échange de données entre le premier processeur et le second dispositif externe.

6. Système d'accès sans fil à large bande (100) selon la revendication 1, **caractérisé en ce que** le sous-système de contrôle comprend également :
une interface périphérique série connectée à l'interface utilisateur téléphonique ;
une interface MCI connectée à l'interface utilisateur téléphonique ;
un module CC/CC configuré pour fournir une tension continue au premier processeur et à l'interface utilisateur téléphonique ; et
une interface USB connectée au premier processeur.

7. Système d'accès sans fil à large bande (100) selon la revendication 1, **caractérisé en ce que** le premier processeur est un microprocesseur intégré, le premier dispositif externe est choisi dans le groupe comprenant un ordinateur personnel, un ordinateur portable et un assistant numérique personnel, et le second dispositif externe est tout type de dispositif de communication supportant une interface RJ11.

8. Système d'accès sans fil à large bande (100) selon la revendication 2, **caractérisé en ce que** le module de bande de base (1040) comprend :
un second processeur ; et
un module de gestion d'alimentation (1044) connecté au second processeur et configuré pour réaliser une conversion de courant et fournir une alimentation au second processeur.

9. Système d'accès sans fil à large bande (100) selon la revendication 8, **caractérisé en ce que** le module de bande de base (1040) comprend également une interface de débogage, le second processeur est un processeur intégré.

10. Système d'accès sans fil à large bande (100) selon la revendication 9, **caractérisé en ce que** l'interface de débogage comprend un port série JTAG et un port série UART.

11. Système d'accès sans fil à large bande (100) selon les revendications 8 ou 9, **caractérisé en ce que** le module de bande de base (1040) comprend également une interface de carte USIM et/ou une interface de carte SIM.

12. Procédé d'accès sans fil à large bande **caractérisé en ce qu'**il comprend les étapes suivantes :
étape S102, connexion d'un terminal utilisateur à un système d'accès sans fil à large bande (104) par l'intermédiaire d'une interface ;
étape S104, initialisation du sous-système d'accès (104) et du sous-système de contrôle (102) du système d'accès sans fil à large bande (100), dans lequel le sous-système d'accès (104) est connecté au sous-système de contrôle (102) par l'intermédiaire d'une interface USB ;
étape S106, appel par le sous-système de contrôle (102) de programmes de traitement d'arrière-plan selon les paramètres reçus entrés par un utilisateur, analyse des paramètres et leur conversion en une commande AT, dans lequel les paramètres comprennent des paramètres d'établissement de réseau qui sont extraits d'une page Web reçue en provenance du terminal utilisateur ;
étape S108, analyse par le sous-système d' accès (104) de la commande AT reçue en provenance du sous-système de contrôle (102), appel des fonctions internes liées, établissement d'un réseau cellulaire, et connexion ou déconnexion d'une connexion de réseau ; et
étape S110, si la connexion réseau est établie, envoi du paquet IP du terminal utilisateur au sous-système d'accès (104) et transfert sur le réseau cellulaire par le sous-système d'accès (104) pour réaliser une transmission de données ;
dans lequel le sous-système de contrôle (102) comprend : un premier processeur en tant que module de traitement (1022) ; un circuit d'attaque Ethernet connecté à un premier dispositif externe en tant que terminal utilisateur par l'intermédiaire d'une interface RJ45 en tant que module d'interface, implémentant ainsi l'échange de données entre le premier processeur et le premier dispositif externe.

13. Procédé d'accès sans fil à large bande selon la revendication 12, **caractérisé en ce que** l'interface est une interface RJ45.

14. Procédé d'accès sans fil à large bande selon la revendication 12, **caractérisé en ce que** l'étape d'initialisation du sous-système d'accès (104) comprend :
la recherche d'un réseau, l'enregistrement et le traitement d'états de veille ;
l'attente et la réception de la commande AT envoyée par le sous-système de contrôle pour contrôler une connexion ou une déconnexion réseau ; et
en réponse à un appel utilisateur ou réseau d'accès entrant, l'accomplissement de services vocaux de base.

15. Procédé d'accès sans fil à large bande selon la revendication 12, **caractérisé en ce que** l'étape d'initialisation du sous-système de contrôle (102) comprend :
l'initialisation des processeurs et du matériel périphérique du sous-système de contrôle (102) ; et
le lancement d'un système d'exploitation et le chargement du module de contrôle.
